# EUROPÄISCHE PATENTSCHRIFT

(11) **EP 3 169 991 B1**
(45) Veröffentlichungstag und Bekanntmachung des Hinweises auf die Patenterteilung: **23.10.2019**
(21) Anmeldenummer: 15736300.3
(22) Anmeldetag: 16.07.2015
(51) Int. Cl.: G01N 27/22, G01F 23/26, G01N 27/447

(54) **SENSOR ZUM ERFASSEN EINER FLÜSSIGKEIT IN EINEM FLUIDKANAL**
SENSOR FOR DETECTING A LIQUID IN A FLUID CHANNEL
CAPTEUR POUR DÉTECTER UN FLUIDE DANS UN CANAL DE FLUIDE

(30) Priorität: 18.07.2014 DE 102014214026
(43) Veröffentlichungstag der Anmeldung: 24.05.2017
(73) Patentinhaber: Fraunhofer-Gesellschaft zur Förderung der angewandten Forschung e.V., 80686 München (DE)
(72) Erfinder: HOFFMANN, Almuth, 69124 Heidelberg-Kirchheim (DE); BAßLER, Michael, 55127 Mainz (DE); POTJE-KAMLOTH, Karin, 85579 Neubiberg (DE); WELZEL, Knut, 55263 Wackernheim (DE); BESOLD, Matthias, 55126 Mainz (DE)
(74) Vertreter: Mehler Achler
(86) Internationale Anmeldenummer: PCT/EP2015/066232
(87) Internationale Veröffentlichungsnummer: WO 2016/008962

(56) Entgegenhaltungen:
- EP-A1- 2 306 183
- WO-A1-95/10040
- DE-A1- 10 107 439
- JAN LICHTENBERG ET AL: "A microchip electrophoresis system with integrated in-plane electrodes for contactless conductivity detection", ELECTROPHORESIS, Bd. 23, 28. Juni 2002 (2002-06-28), Seiten 3769-3780, XP55218619, Weinheim
- GUIJT R M ET AL: "CONDUCTIVITY DETECTION FOR CONVENTIONAL AND MINIATURISED CAPILLARY ELECTROPHORESIS SYSTEMS", ELECTROPHORESIS, WILEY INTERSCIENCE, DE, Bd. 25, Nr. 23/24, 1. Januar 2004 (2004-01-01), Seiten 4032-4057, XP009057628, ISSN: 0173-0835, DOI: 10.1002/ELPS.200406156

## Beschreibung

Die Erfindung betrifft einen Sensor zum Erfassen einer Flüssigkeit in einem Fluidkanal eines mikrofluidisches Bauteils, ein mikrofluidisches Bauteil mit einer Oberfläche, einem im Innern, im Wesentlichen parallel zu der Oberfläche verlaufenden Fluidkanal und einem solchen Sensor und ein Verfahren zum Erfassen einer Flüssigkeit in einem Fluidkanal eines solchen mikrofluidischen Bauteils.

Abweichungen der Kanalgeometrie von einem Sollwert, z.B. aufgrund von Fertigungsschwankungen, können selbst bei genauer Kenntnis der Parameter eines Fluidstroms in dem Kanal zu Unsicherheiten hinsichtlich der Position der Flüssigkeitsfront, d.h. der Grenzfläche zwischen der Flüssigkeit zu einem angrenzenden Medium, führen. Weitere potentielle Fehlerquellen sind Ungenauigkeiten im Fördervolumen der Pumpe. Bei bereits benetzten oder wieder getrockneten Kanälen tritt zudem das Problem der zeitlichen Veränderung der Kapillarkräfte auf. Zur Kontrolle in fluidischen Systemen ablaufender Prozesse kann es deshalb erforderlich sein, an definierten Positionen entlang des Fluidkanals das Vordringen der Flüssigkeitsfront zu überprüfen.

Grundsätzlich ist es bei solchen Detektionsverfahren zweckmäßig, einen berührungslosen Sensor zu verwenden, der also nicht in unmittelbarem elektrischen oder mechanischen Kontakt zur Flüssigkeit steht, sondern außerhalb des Fluidkanals angebracht werden kann. Berührungslose Detektoren sind in Form von Lichtschranken bekannt, die Licht durch ein transparentes Substrat des mikrofluidischen Bauteils einkoppeln. Beispielhaft wird auf die Schrift DE 10 2009 000 529 A1 verwiesen, die einen mikrofluidischen Chip offenbart, bei dem der Druck innerhalb des fluidischen Systems indirekt durch Messung des Flüssigkeitsstandes in einem toten Ende eines mit einer Gasblase gefüllten Kanals ermittelt wird. Der Flüssigkeitsstand, d. h. die Grenzfläche zwischen der Flüssigkeit und der angrenzend Gasblase wird optisch ausgelesen, indem ein Lichtstrahl eingekoppelt und wahlweise in einer Transmissionsmessung dessen Abschwächung oder in einer Reflexionsmessung die Änderung der an der Grenzfläche des Messkanals reflektierten Lichtes detektiert wird. Zum automatischen Auslesen des Druckes wird vorgeschlagen, den Chip in vorbestimmter Weise in ein geeignetes Betreibergerät mit einer Lichtquelle und einem Lichtsensor einzusetzen.

Eine grundsätzliche Schwierigkeit, die bei dieser Messmethode auftreten kann, ist die genaue Positionierung der Lichtquelle (bzw. eines Lichtleiters soweit vorhanden) und das hinreichend genaue Fokussieren des Lichtes mittels optischer Elemente. Ein anderes grundsätzliches Problem beim optischen Auslesen eines Flüssigkeitsstands in einem Fluidkanal entsteht durch das Benetzen der Kanäle. Eine benetzte Kanalwand hat andere optische Eigenschaften als eine nicht benetzte Kanalwand, so dass Signalunterschiede nicht in jedem Fall eine eindeutige Aussage darüber erlauben, ob der Kanal mit Flüssigkeit gefüllt oder nur benetzt ist. So kann beispielsweise ein leerer Kanal fälschlicherweise als voll interpretiert werden oder umgekehrt. Des Weiteren ist diese Detektionsmethode auf transparente Substrate beschränkt.

Neben der optischen Detektion ist aus anderen technischen Gebieten auch die kapazitive Auslese eines Füllstandes eines Mediums in einem Behälter mit nicht metallischer Behälterwand bekannt. Es wird beispielhaft auf die Schrift DE 199 49 985 C2 verwiesen. Der darin beschriebene Füllstandssensor umfasst unter anderem eine Kapazität bestehend aus zwei benachbarten Elektroden an der Behälterwand, die eine kapazitive Rückkopplung eines angeschlossenen Verstärkers darstellt. Zugleich bildet eine der Elektroden gegenüber der Masse eine weitere Kapazität, welche durch den Füllstand in dem Behälter variiert wird. Die Beschaltung des Detektors ist so eingerichtet, dass der Verstärker aufgrund der kapazitiven Rückkopplung nur dann oszilliert, wenn der Füllstand des Mediums im Behälter und damit die erste Kapazität unterhalb einer vorbestimmten Schwelle liegen.

Verfahren zur kapazitiven Bestimmung von Bestandteilen in einer Flüssigkeit in einem durchströmten Fluidkanal, insbesondere in einem mikrofluidischen System, sind aus dem Gebiet der Kapillarelektrophorese bekannt. Diesbezüglich wird beispielhaft auf die Schrift DE 101 07 439 A1 oder die folgenden drei Aufsätze verwiesen:
- "Detection of inorganic ions on a capillary electrophoresis microchip using a conductivity technique", Petkovic-Duran et al., Proc. of SPIE Vol. 6416, 64160J, 2006;
- "Evaluation of microchip capillary electrophoresis with external contactless conductivity detection for the determination of major inorganic ions and lithium in serum and urine samples", Pavel Kubáň et al., Lab Chip, 2008, 8, 1829-1836;
- "Ten years of axial capacitively coupled contactless conductivity detection for CZE - a review", Pavel Kubáň et al., Electrophoresis 2009, 30, 176 - 188.

Die dort beschriebene Kapillarelektrophorese wird mit mikrofluidischen Systemen durchgeführt, bei denen entlang eines Fluidkanals hintereinander zwei Elektroden angeordnet sind, zwischen welchen eine senkrecht zu der Richtung des Fluidkanals stehende faradayische Abschirmung angeordnet ist, um eine direkte kapazitive Kopplung zwischen den Elektroden zu vermeiden. Die kapazitive Kopplung soll demnach - jedenfalls theoretisch - ausschließlich über die in dem Fluidkanal befindliche Flüssigkeit erfolgen, wobei die Messung im Hinblick auf einen Nachweis unterschiedlicher Ionen in der Flüssigkeit eine sehr hohe Empfindlichkeit erfordert.

In dem Aufsatz von Jan Lichtenberg et al "A microchip electrophoresis system with integrated in-plane electrodes for contactless conductivity detection", ELECTROPHORESIS, Bd. 23, 28. Juni 2002 (2002-06-28), Seiten 3769-3780, XP055218619, Weinheim, wird die Kapillareletrophorese mit einer Leitfähigkeitsmessung durch einen ähnlichen Aufbau mit einer mittigen Abschirmung mit der durch einen Aufbau ohne eine solche Abschirmung gegenübergestellt.

Andere Verfahren zur kapazitiven Bestimmung von Inhomogenitäten oder Änderungen in Flüssigkeiten oder zur Bestimmung von Strömungsgeschwindigkeiten eines Mehrphasenfluids in einem Fluidkanal sind aus den Schriften WO 95/10040 A1, US 2008/0121045 A1, DE 34 33 148 A1 oder DE 33 02 736 A1 oder aus dem Aufsatz von Guijt R M et al "Conductivity detection for conventional and miniaturised capillary electrophoresis systems", ELECTROPHRESIS, WILEY INTERSCIENCE, DE, Bd. 25, Nr. 23/24, 1. Januar 2004 (2004-01-01), Seiten 4032-4057, XP009057628, ISSN: 0173-0835, DOI: 10.1002/ELPS.20046156 bekannt. Die Schrift DE 2 239 359 A behandelt einen kapazitiven Feuchtigkeitsdetektor. Die Schrift US 2013/0293246 A1 beschreibt ein Verfahren zur kapazitiven Bestimmung eines Tröpfchens in einem Tröpfchenaktuator. Die Schrift US 8,489,341 B2 befasst sich mit einem Verfahren zur Bestimmung der Zusammensetzung einer Flüssigkeit mithilfe einer Kondensatoranordnung.

Aufgabe der vorliegenden Erfindung ist es hingegen, einen Sensor, ein mikrofluidisches Bauteil und ein Verfahren zum Erfassen einer Flüssigkeit in einen Fluidkanal eines mikrofluidischen Bauteils bereitzustellen, der bzw. das auf einfache Weise eine möglichst zuverlässige Detektion der Flüssigkeit unabhängig von der Beschaffenheit und einer etwaigen Benetzung des Fluidkanals ermöglicht.

Die Aufgabe wird einerseits gelöst durch einen Sensor zum Erfassen einer Flüssigkeit in einem Fluidkanal eines mikrofluidischen Bauteils mit den Merkmalen des Anspruches 1, der eine Elektrodenanordnung mit einer Sendeelektrode, einer Empfangselektrode und einer ersten Abschirmelektrode umfasst, die koplanar auf einer Ebene angeordnet und parallel zu dem Fluidkanal und oberhalb oder unterhalb benachbart zu dem Fluidkanal positionierbar sind, wobei die Sendeelektrode und die Empfangselektrode direkt kapazitiv gekoppelt sind, indem sie jeweils eine benachbart angeordnete Kante mit einem dazwischen liegenden Dielektrikum aufweisen, wobei zwischen der Sendeelektrode und der Empfangselektrode keine Abschirmung vorgesehen ist.

Andererseits wird die Aufgabe gelöst durch ein Verfahren mit den Merkmalen des Patentanspruches 12. Das Verfahren zum Erfassen einer Flüssigkeit in einem Fluidkanal eines mikrofluidischen Bauteils erfolgt mittels einer Elektrodenanordnung mit einer Sendeelektrode, einer Empfangselektrode und einer ersten Abschirmelektrode, die koplanar auf einer Ebene im Wesentlichen parallel zu dem Fluidkanal und oberhalb oder unterhalb benachbart zu dem Fluidkanal angeordnet sind, wobei die Sendeelektrode und die Empfangselektrode jeweils eine benachbart angeordnete Kante mit einem dazwischen liegenden Dielektrikum aufweisen und wobei zwischen der Sendeelektrode und der Empfangselektrode keine Abschirmung vorgesehen ist, und umfasst die Schritte:
- Beaufschlagen der Sendeelektrode mit einer Wechselspannung,
- Einkoppeln der Wechselspannung in die Empfangselektrode,
- Abgreifen eines Wechselstrom- oder Wechselspannungssignals an der Empfangselektrode,
- Extrahieren von Extremwerten aus dem abgegriffenen Wechselstrom- oder Wechselspannungssignal,
- Zuordnen der Extremwerte zu der Position einer Flüssigkeitsfront.

Es folgen Begriffsdefinitionen: als "mikrofluidisches Bauteil" im Sinne dieser Schrift wird ein in der Regel flaches Bauelement, typischerweise im Scheckkartenformat, insbesondere ein mikrofluidischer Chip, verstanden, dessen Grundplatte (auch Substrat bezeichnet) insbesondere aus einem Polymermaterial, Glas oder Silizium besteht, in welches der Fluidkanal oder mehrere Fluidkanäle in an sich bekannter Weise durch Spritzgussverfahren, Heißprägeverfahren oder Fräsen eingearbeitet ist. Zusätzlich zu dem Fluidkanal können andere Mikrostrukturen, wie etwa Mikropumpen, Aktoren, Sensoren, Membranen, Ventile, Rührelemente oder dergleichen an oder in dem mikrofluidischen Bauteil vorgesehen sein.

Als "Fluidkanal" im Sinne dieser Schrift sind beliebige Formen von Kavitäten zum Führen oder Aufbewahren von Fluidproben zu verstehen, insbesondere Kanäle oder Mikrokanäle aber auch sonstige Hohlräume in dem Bauteil, in denen die Fluidprobe beispielsweise gespeichert oder einem mechanischen, thermischen oder chemischen oder biologischen Prozess unterzogen werden kann. Bevorzugt wird der Fluidkanal durch eine Nut in der Grundplatte gebildet, die auf ihrer Oberseite mittels einer Abdeckung gegenüber der Umgebung abgeschlossen ist.

Das mikrofluidische Bauteil, gelegentlich auch als "Lab-on-a-Chip" bezeichnet, kann allgemein zur chemischen Synthese oder Analyse genauso wie zur medizinischen Diagnostik im Labor oder vor Ort eingesetzt werden. Es zeichnet sich insbesondere aufgrund der Miniaturisierung zur Synthese und/oder Analyse kleinster Substratmengen aus. Hierbei kommt es nicht selten auf einen sehr kontrollierten Durchfluss der Fluidprobe und auf eine genaue Positionsbestimmung von Flüssigkeitsfronten sowie Druckverhältnisse in der Fluidleitung bzw. dem System von Fluidleitungen in dem Bauteil an.

Als "Sendeelektrode" wird diejenige Elektrode bezeichnet, welche zum Verbinden mit einer Wechselspannungsquelle vorgesehen ist. Entsprechend wird als "Empfangselektrode" jene der Elektroden bezeichnet, welche zum Verbinden mit einem Wechselstrom- oder Wechselspannungsmessgerät vorgesehen ist. Die "Abschirmelektrode" ist grundsätzlich passiv und wird zu diesem Zweck auf ein festes Potential, vorzugsweise auf Massepotential, gezogen.

Die Erfindung bedient sich, wie die vorstehend beschriebene Kapillarelektrophorese, der kapazitiven Detektierung, einer Flüssigkeit, wobei allerdings im Unterschied dazu keine Erkenntnisse über etwaige Ionen in der Flüssigkeit, sondern allein die Präsenz der Flüssigkeit und insbesondere der Flüssigkeitsfront nachgewiesen werden soll. Deshalb ist im Gegensatz zur vorstehend beschriebenen Detektion anorganischer Ionen keine Abschirmung zwischen der Sendeelektrode und der Empfangselektrode vorgesehen. Vielmehr sind diese Elektroden direkt kapazitiv miteinander gekoppelt. Direkt gekoppelt heißt, das elektrische Feld kann sich zwischen der Sendeelektrode und der Empfangselektrode direkt über die umgebende Luft, das dielektrische Substrat des mikrofluidischen Bauteils, auf dessen Oberfläche die Elektroden angebracht sind, und gegebenenfalls die in dem Fluidkanal anstehende Flüssigkeit in Abhängigkeit von der Permeabilität der einzelnen Medien und ungestört durch eine faradayische Abschirmung ausbreiten.

Demnach dient die Abschirmung nicht der Unterdrückung der direkten Kopplung zwischen der Sende- und Empfangselektrode, sondern vielmehr der Signalverstärkung beim Passieren einer Flüssigkeitsfront. Die lokale Änderung der Gesamtpermittivität durch die passierende Flüssigkeit führt zu einer Feldveränderung, die durch eine geschickte geometrische Anordnung der ersten Abschirmelektrode verstärkt bzw. räumlich so begrenzt wird, dass das Signal eine genauere Auskunft über den Ort der Flüssigkeitsfront erlaubt, wie nachfolgend anhand von Beispielen noch genauer erläutert werden wird.

Das Detektieren umfasst verfahrensmäßig neben einem Abgreifen eines Wechselstrom- oder Wechselspannungssignals an der Empfangselektrode das anschließende Extrahieren von Extremwerten aus dem abgegriffenen Wechselstrom- oder Wechselspannungssignal und schließlich das Zuordnen der Extremwerte zu der Position einer Flüssigkeitsfront. Je nach geometrischer Anordnung der Elektroden können einer oder insbesondere mehrere Extremwerte nachgewiesen werden, wodurch die Kenntnisse über die Position der Flüssigkeitsfront verbessert wird.

Der erfindungsgemäße Sensor weist einen einfachen Aufbau auf und kann daher in einer vorteilhaften Ausgestaltung der Erfindung auf einfache und platzsparende Weise in ein Betreibergerät integriert werden. Das mikrofluidische Bauteil braucht zur Messung nur mit seiner parallel zu dem Fluidkanal verlaufenden Oberfläche benachbart zu der Elektrodenanordnung des externen Sensors in dem Betreibergerät positioniert zu werden. Dabei ist beispielsweise mittels Anschlagelementen dafür Sorge zu tragen, dass der relevante Fluidkanal in geeigneter Lage benachbart zu der Elektrodenanordnung mit der Sendeelektrode, der Empfangselektrode und der ersten Abschirmelektrode zu liegen kommt. Dieser Aspekt der Erfindung wird als "externer Sensor" bezeichnet, wobei auf die Anordnung des Sensors relativ zu dem mikrofluidischen Bauteil Bezug genommmen wird.

Erfindungsgemäß weisen die Sendeelektrode und die Empfangselektrode des Sensors jeweils eine benachbart angeordnete Kante mit einem dazwischenliegenden Dielektrikum auf.

Gemeint ist damit, dass zwischen den beiden benachbart angeordneten Kanten ausschließlich Material mit dielektrischen Eigenschaften und kein elektrischer Leiter angeordnet ist. Bei der vorstehend beschriebenen Anordnung des mikrofluidischen Bauteils in einem Betreibergerät befinden sich zumeist Luft, das Substratmaterial des mikrofluidischen Bauteils und das Platinenmaterial des Sensors, auf dem die Elektrodenanordnung fixiert ist, als Dielektrika zwischen den Elektroden. Schließlich kommt es darauf an, dass jedenfalls keine elektrisch leitende Substanz in den Zwischenraum zwischen den Elektroden eingebracht wird.

Besonders bevorzugt verlaufen die benachbart angeordneten Kanten parallel zueinander. Diese Ausgestaltung entspricht zumindest theoretisch der Anordnung zweier planparalleler Platten eines Plattenkondensators.

Signaltechnisch macht es bei optimaler Ausrichtung keinen signifikanten Unterschied, ob die benachbarten Kanten während der Messung in Richtung des Fluidkanals verlaufen oder senkrecht zu diesem angeordnet sind. Überrachenderweise sieht der Signalverlauf jedenfalls der Form nach in beiden Fällen sehr ähnlich aus. Insofern kommen grundsätzlich beide Anordnungen als erfindungsgemäße Ausgestaltung in Betracht. Allerdings hat sich die senkrechte Anordnung der Kanten in Bezug auf die Orientierung des Fluidkanals als bevorzugt herausgestellt, weil diese eine höhere Positionstoleranz aufweist. Das Signal ist wesentlich unempfindlicher gegenüber einem geringfügigen lateralen Versatz der Elektroden in Bezug auf die Lage des Fluidkanals. Dementsprechend sieht das erfindungsgemäße Verfahren vor, dass die benachbart angeordneten Kanten bevorzugt im Wesentlichen senkrecht zu dem Fluidkanal orientiert sind.

Weiterhin bevorzugt ist die erste Abschirmelektrode kapazitiv mit der Sendeelektrode oder mit der Empfangselektrode oder besonders bevorzugt mit der Sendeelektrode und der Empfangselektrode gekoppelt.

Letzterer Fall ist deshalb besonders bevorzugt, weil dieser, wie vorstehend schon angedeutet, einen Signalverlauf mit zwei Extrema generiert. Die Extrema können dann zwei Positionen der Flüssigkeitsfront zugeordnet werden, nämlich einerseits wenn die Flüssigkeitsfront im Fluidkanal die Mitte des Elektrodenpaares der Sende- und der Empfangselektrode erreicht und andererseits wenn sie zwischen der Empfangs-/Sendeelektrode und der ersten Abschirmelektrode angekommen ist.

Demzufolge ist ein mikrofluidisches Bauteil besonders bevorzugt, wenn die erste Abschirmelektrode wenigstens zwei Abschnitte aufweist, von denen, in einer Richtung in der Ebene der Elektrodenanordnung betrachtet, ein erster Abschnitt vor und ein zweiter Abschnitt hinter der Sendeelektrode und der Empfangselektrode angeordnet sind.

Dies kann in einer besonders bevorzugten Ausführungsform dadurch realisiert werden, dass die erste Abschirmelektrode die Sendeelektrode und die Empfangselektrode zumindest teilweise und bevorzugt vollständig umrahmt.

Bei einer vorteilhaften Weiterbildung des Verfahrens ist dementsprechend vorgesehen, dass die erste Abschirmelektrode wenigstens zwei Abschnitte aufweist, von denen, jeweils in Richtung des Fluidkanals betrachtet, ein erster Abschnitt vor und ein zweiter Abschnitt hinter der Sendeelektrode und der Empfangselektrode angeordnet sind, wobei aus wenigstens zwei zeitlich aufeinanderfolgenden Extremwerten eine Geschwindigkeit der Flüssigkeitsfront abgeleitet wird.

Das Extrahieren von Extremwerten aus dem abgegriffenen Wechselstrom- oder Wechselspannungssignal erfolgt vorzugsweise in an sich bekannter Weise durch Bildung der Ableitung aus dem abgegriffenen Signal und Bestimmung der Nulldurchgänge der Ableitung, was regelmäßig zu einer präziseren Extremwertbestimmung führt.

Vorzugsweise ist der Sensor dahingehend weitergebildet, dass eine Signalquellemit der Sendeelektrode verbunden ist und dass ein Signalaufnehmer mit der Empfangselektrode verbunden ist.

Dabei ist die Signalquelle vorzugsweise eine Wechselspannungsquelle und der Signalaufnehmer vorzugsweise dazu eingerichtet, den zeitlichen Verlauf eines Wechselstrom- oder Wechselspannungssignals zu erfassen.

In Analogie zu der vorteilhaften Weiterbildung des Verfahrens ist der Sensor vorzugsweise dahingehend weitergebildet, dass der Signalaufnehmer eingerichtet ist, aus dem Wechselstrom- oder Wechselspannungssignal wenigstens einen Extremwert zu extrahieren und auszugeben.

Als Erregersignal kommt im einfachsten Fall und daher bevorzugt eine Wechselspannung mit konstanter Frequenz und Amplitude in Betracht.

Vorzugsweise wird aus dem an der Empfangselektrode abgegriffenen Wechselstrom-/spannungssignal ein Effektivstrom bzw. eine Effektivspannung ermittelt, der zur Extremwertbestimmung herangezogen wird.

Von Vorteil ist es weiterhin, wenn die Elektrodenanordnung eine parallel und im Abstand zu der Ebene angeordnete zweite Abschirmelektrode aufweist.

Durch eine solche rückseitige Abschirmung der Sende- und Empfangselektroden lässt sich das Signal weiter verbessern. Sie schränkt den sensitiven Bereich des Sensors auf den Zwischenraum zwischen der durch die Sende-, Empfangs- und erste Abschirmelektrode gebildeten Ebene und die Ebene der zweiten Abschirmelektrode ein, und erhöht damit die Sensitivität für dort stattfindende Permittivitätsänderungen.

Sind die Sende-, Empfangs- und erste Abschirmelektrode beispielweise auf einer Oberfläche einer Platine (PCB, printed circuit board) aufgebracht, ist die zweite Abschirmelektrode auf einfache Weise und deshalb bevorzugt auf der gegenüberliegenden Oberfläche der Platine und besonders bevorzugt in etwa flächendeckend mit der Sende-, Empfangs- und erste Abschirmelektrode angeordnet.

Alternativ zu der vorstehend beschriebenen Verwendung des erfindungsgemäßen externen Sensors in einem Betreibergerät, wird die Aufgabe auch durch ein mikrofluidisches Bauteil mit den Merkmalen des Anspruches 15 gelöst, welches eine Oberfläche, einen im Inneren, im Wesentlichen parallel zu der Oberfläche verlaufenden Fluidkanal und einen wie vorstehend beschriebenen Sensor aufweist, wobei die Sendeelektrode, die Empfangselektrode und die erste Abschirmelektrode koplanar auf der Oberfläche und oberhalb oder unterhalb benachbart zu dem Fluidkanal angeordnet sind.

Der Sensor kann also auch als ein mit dem mikrofluidisches Bauteil verbundenes Element ausgebildet sein. Bei diesem Aspekt der Erfindung wird von einem "integrierten Sensor" gesprochen, was sich wiederum auf die Anordnung des Sensors relativ zu dem mikrofluidischen Bauteil bezieht.

Alle Sende-, Empfangs- und Abschirmelektroden des erfindungsgemäßen mikrofluidischen Bauteils können auf einfache Weise auf dessen Oberfläche(n) aufgebracht werden. In Frage kommen hierfür bevorzugt alle Arten der metallischen Beschichtung. Insbesondere bevorzugt sind auflaminierte oder aufgeklebte Folien, das Auftragen eines flüssigen, leitenden Lackes oder einer pastösen leitenden Substanz (Leitpaste) mit anschließendem Trocknen oder Aushärten, das Aufdampfen oder das elektrolytische Abscheiden einer metallischen oder metallhaltigen Beschichtung. Alternativ können auch anderweitige metallische Körper auf der Oberfläche des mikrofluidischen Bauteils mechanisch oder adhäsiv befestigt werden.

Besonders bevorzugt ist aus den vorstehend genannten Gründen, dass die benachbart angeordneten Kanten der Sende- und Empfangselektroden auf der Oberfläche des mikrofluidischen Bauteils im Wesentlichen senkrecht zu dem Fluidkanal orientiert sind.

Die Sende-, Empfangs- und erste Abschirmelektrode können unmittelbar auf der Oberfläche des Substrats oder der Grundplatte des mikrofluidischen Bauteils, also dessen Unterseite, angebracht sein, in welches die Fluidleitung in der vorstehend beschriebenen bekannten Weise eingebracht ist. Besonders bevorzugt befinden sie sich jedoch auf der Oberseite, die durch die Abdeckung gebildet wird, weil die Abdeckung meist eine sehr viel dünnere Folie ist, wodurch ein geringer Abstand zwischen der Elektrodenanordnung und dem Fluidkanal erzielt werden kann, was wiederum die Messgenauigkeit erhöht, wie nachfolgend gezeigt werden wird.

Die Sendeelektrode, Empfangselektrode und erste Abschirmelektrode der Elektrodenanordnung sind deshalb vorzugsweise in einem Abstand von 500µm oder weniger, und besonders bevorzugt von 100µm oder weniger zu dem Fluidkanal angeordnet.

Analog wird bei dem erfindungsgemäßen Verfahren unter Verwendung eines externen Sensors das mikrofluidische Bauteil vorzugsweise mit seiner Oberseite, die durch die Abdeckung gebildet wird, benachbart zu der Elektrodenanordnung in das Betreibergerät eingelegt.

In dem mikrofluidischen Bauteil mit integriertem Sensor ist die erste Abschirmelektrode bevorzugt benachbart zur Sendeelektrode oder zur Empfangselektrode oder zur Sendeelektrode und zur Empfangselektrode angeordnet und überspannt den Fluidkanal wenigstens einmal. Wenn wie vorstehend ausgeführt die erste Abschirmelektrode wenigstens zwei Abschnitte aufweist, sind diese, vorzugsweise in Richtung des Fluidkanals betrachtet, vor und hinter der Sendeelektrode und der Empfangselektrode angeordnet.

Weitere Vorteile der Erfindung werden nachfolgend unter Zuhilfenahme der Figuren anhand von Ausführungsbeispielen näher erläutert. Es zeigen:
- Figur 1: eine perspektivische Ansicht eines mikrofluidischen Bauteils und eines Sensors mit einer Sendeelektrode, einer Empfangselektrode und einer ersten Abschirmelektrode;
- Figuren 2a, 2b: zwei erste Elektrodenanordnungen des mikrofluidischen Bauteils;
- Figuren 3a, 3b: zwei zweite Elektrodenanordnungen des mikrofluidischen Bauteils;
- Figuren 4a, 4b: zwei dritte Elektrodenanordnungen des mikrofluidischen Bauteils;
- Figuren 5a, 5b: zwei vierte Elektrodenanordnungen des mikrofluidischen Bauteils;
- Figur 6: eine Seitenansicht einer ersten Ausführungsform des Sensors/mikrofluidischen Bauteils mit Beschaltung;
- Figur 7: ein Diagramm einer mit dem erfindungsgemäßen Sensor durchgeführten Simulation;
- Figur 8: ein Diagramm zweier Simulationen eines erfindungsgemäßen Sensors in unterschiedlicher Orientierung zum Fluidkanal;
- Figur 9: das Ableitungssignal;
- Figur 10: eine Illustration der Zuordnung der Extremwerte zu der Position einer Flüssigkeitsfront in dem Fluidkanal;
- Figur 11: eine Simulation der Feldlinienverteilung bei voranschreitender Flüssigkeitsfront in dem Fluidkanal;
- Figur 12: ein Diagramm zur Illustration der Abhängigkeit des Ableitungssignals von dem Abstand zwischen der Elektrodenanordnung und dem Fluidkanal;
- Figur 13: der Verlauf des Signals beim Passieren einer Flüssigkeitssäule in dem Fluidkanal und
- Figur 14: eine Seitenansicht einer zweiten Ausführungsform des Sensors/mikrofluidischen Bauteils mit zweiter Abschirmelektrode.

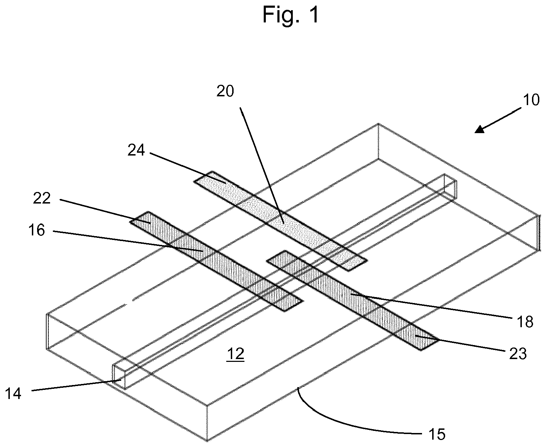

Figur 1 zeigt einen Ausschnitt eines mikrofluidischen Bauteils 10 bestehend aus einer Grundplatte und einem Substrat 12, in dessen Inneren ein Fluidkanal 14 verläuft. Das mikrofluidische Bauteil 10 weist eine Oberfläche 15 auf, welche im Wesentlichen parallel zu dem Fluidkanal 14 angeordnet ist und auf der ein Sensor in Form dreier Elektroden 16, 18 und 20 angeordnet ist. In der dargestellten Orientierung befinden sich die drei Elektroden 16, 18 und 20 also auf der Unterseite des Substrats 12 auf der gleichen Oberfläche 15 und sind deshalb koplanar angeordnet. Die Elektroden 16, 18 und 20 weisen jeweils eine rechteckige, streifenförmige Geometrie auf und erstrecken sich jeweils von einem gegenüberliegenden Rand des Substrats 12 bis über den Fluidkanal hinweg, so dass sie benachbart zu dem Fluidkanal 14 angeordnet sind. Zumindest im Bereich unterhalb des Fluidkanals sind die Elektroden 16, 18 und 20 parallel und unmittelbar benachbart zueinander angeordnet. Zwischen den Elektroden 16 und 18 einerseits sowie zwischen den Elektroden 18 und 20 andererseits ist hier ein Zwischenraum vorgesehen, in dem sich ausschließlich ein Dielektrikum befindet, so dass die Elektroden 16 und 18 und 18 und 20 jeweils direkt kapazitiv miteinander gekoppelt sind. Die über die Seiten hinausragenden Enden 22, 23 und 24 der Elektroden 16, 18 und 20 stellen schematisch Anschlusspunkte für eine Spannungsquelle und eine Messelektronik dar.

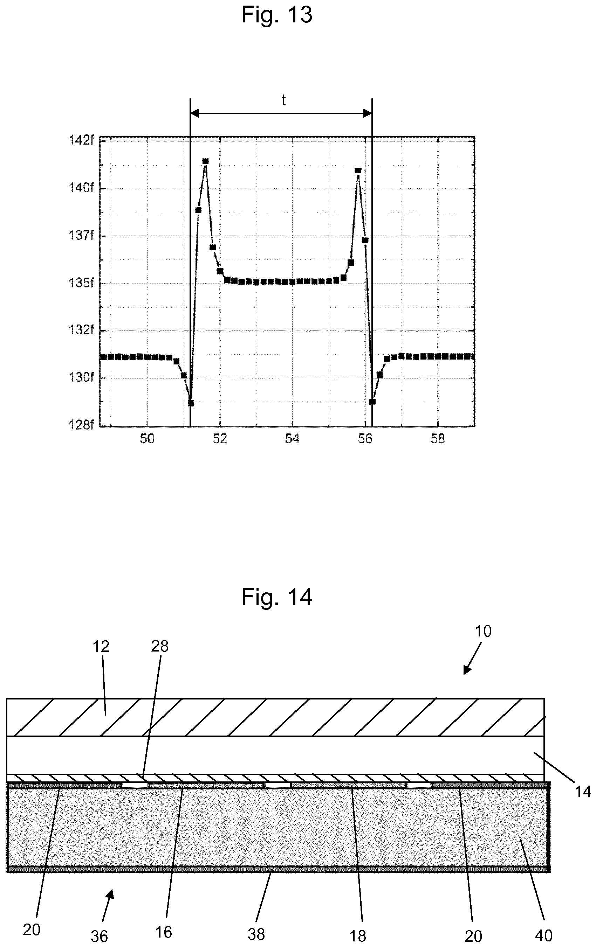

In dieser wie in allen weiteren Darstellungen mit Ausnahme der Figur 14 ist bewusst offen gehalten, ob der Sensor als mit dem mikrofluidischen Bauteil 10 verbundenes Element, also als integrierter Sensor, oder als externer Sensor ausgeführt ist, der beispielsweise Bestandteil eines Betreibergerätes ist, wobei das mikrofluidische Bauteil zur Messung in der dargestellten Lage relativ zu dem Sensor angeordnet wird. Das der Erfindung zu Grunde liegende und im Folgenden erläuterte Wirkprinzip ist in beiden Fällen dasselbe.

Es wird ferner angemerkt, dass Figur 1 lediglich eine schematische Ausschnittdarstellung eines mikrofluidischen Bauteils ohne weitere funktionale Elemente typischer mikrofluidischer Chips zeigt, auf die es vorliegend allerdings auch nicht ankommt. Auch ist die Darstellung des mikrofluidischen Bauteils dahingehend vereinfacht, dass die typischerweise zur Abdichtung einseitig auf dem Substrats angebrachte Abdeckfolie nicht differenziert dargestellt ist.

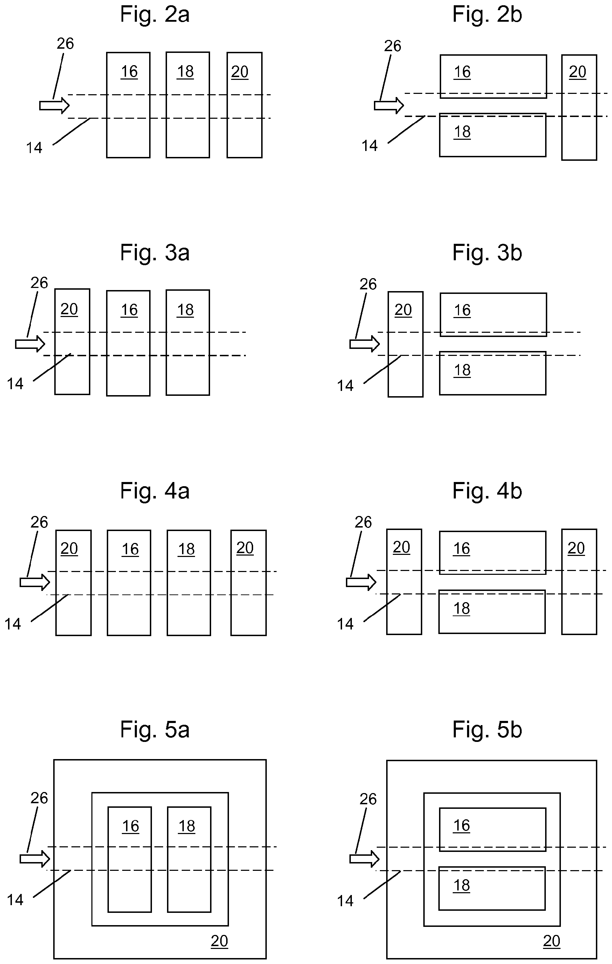

In den Figuren 2a, 2b bis 5b sind insgesamt acht verschiedene Elektrodenanordnungen gezeigt, welche zum Umfang der vorliegenden Erfindung zählen, diesen aber nicht abschließend wiedergeben. Die Auswahl der Elektrodenanordnungen zeigt Unterschiede sowohl hinsichtlich der Anordnung als auch der Gestaltung der Abschirmelektrode und hinsichtlich der Orientierung der Empfangs- und Sendeelektrode relativ zu dem Fluidkanal 14.

In den Figuren 2a und 2b sind jeweils Elektrodenanordnungen mit einer Sendeelektrode 16, einer Empfangselektrode 18 und einer einteiligen Abschirmelektrode 20 gezeigt, wobei in beiden Fällen die Abschirmelektrode 20, in der durch den Pfeil 26 markierten Fluidrichtung betrachtet, hinter der Sendeelektrode 16 und der Empfangselektrode 18 angeordnet ist. Die Figuren 2a und 2b unterscheiden sich dahingehend, dass die Orientierung der Sende- und Empfangselektroden um 90° gedreht ist. Während in Figur 2a die zwischen den parallelen, benachbart angeordneten Kanten der Sende- und Empfangselektroden befindliche Lücke senkrecht zu dem Fluidkanal 14 orientiert ist, ist sie in der Ausführungsform gemäß Figur 2b parallel zu dem Fluidkanal 14 und zentriert über bzw. unter diesem angeordnet. Beide Ausführungsformen ergeben im Wesentlichen identische Signalverläufe, wie nachfolgend noch dargelegt werden wird.

Hier wie in allen weiteren Beispielen mit senkrechter Elektrodenanordnung kommt es nicht auf die Reihenfolge der Anordnung der Sende- und Empfangselektrode in Bezug auf die Strömungsrichtung 26 an, weshalb die Überlegungen grundsätzlich auch bei vertauschter Zuordnung zutreffen.

Das Paket aus Sende- und Empfangselektrode wird nachfolgend auch als "Basiselektrodenanordnung" bezeichnet.

In den Figuren 3a und 3b ist jeweils analog eine weitere Anordnung einer Sendeelektrode 16, einer Empfangselektrode 18 sowie einer einteiligen Abschirmelektrode 20 gezeigt. Die Elektrodenanordnungen unterscheiden sich zu denen gemäß der Figuren 2a und 2b dadurch, dass hier die Abschirmelektrode 20, in Fluidrichtung 26 betrachtet, vor der Basiselektrodenanordnung angeordnet ist. Analog zu den Ausführungsbeispielen in den Figuren 2a und 2b unterscheiden sich die Ausführungsbeispiele der Elektroden in den Figuren 3a und 3b dadurch, dass die Lücke zwischen der Sendeelektrode 16 und der Empfangselektrode 18 einmal senkrecht zur Orientierung des Fluidkanals 14 und einmal parallel und zentriert zu der Orientierung des Fluidkanals 14 ausgereichtet ist.

In den Figuren 4a und 4b ist die Abschirmelektrode 20 zweiteilig ausgeführt, wobei, in Bezug auf die Fluidrichtung 26, ein erster Teil vor der Basiselektrodenanordnung und ein zweiter Teil hinter der Basiselektrodenanordnung angeordnet sind. Die Basiselektrodenanordnung entspricht jeweils der aus den vorstehend beschriebenen Ausführungsbeispielen gemäß den Figuren 4a und 4b.

Eine weitere erfindungsgemäße Elektrodenanordnung ist in den Figuren 5a und 5b dargestellt, bei der wiederum der Unterschied in der Ausgestaltung der Abschirmelektrode 20 zu finden ist. Diese ist hier rahmenförmig, die Sendeelektrode 16 und die Empfangselektrode 18 vollständig umgebend ausgeführt. Abermals unterscheiden sich die Beispiele in den Figuren 5a und 5b nur durch die Orientierung der Lücke zwischen der Sendeelektrode 16 und der Empfangselektrode 18.

Allen voranstehend beschriebenen Ausgestaltungen der Elektrodenanordnung ist gemeinsam, dass die Abschirmelektrode 20 benachbart zur Sendeelektrode 16 oder zur Empfangselektrode 18 oder zur Sendeelektrode 16 und zur Empfangselektrode 18 angeordnet ist und dabei den Fluidkanal 14 wenigstens einmal überspannt. Genau dieser Umstand stellt einen signifikanten Signalverlauf sicher, anhand dessen sich die Position einer den Fluidkanal 14 durchströmenden Flüssigkeitsfront bestimmen lässt.

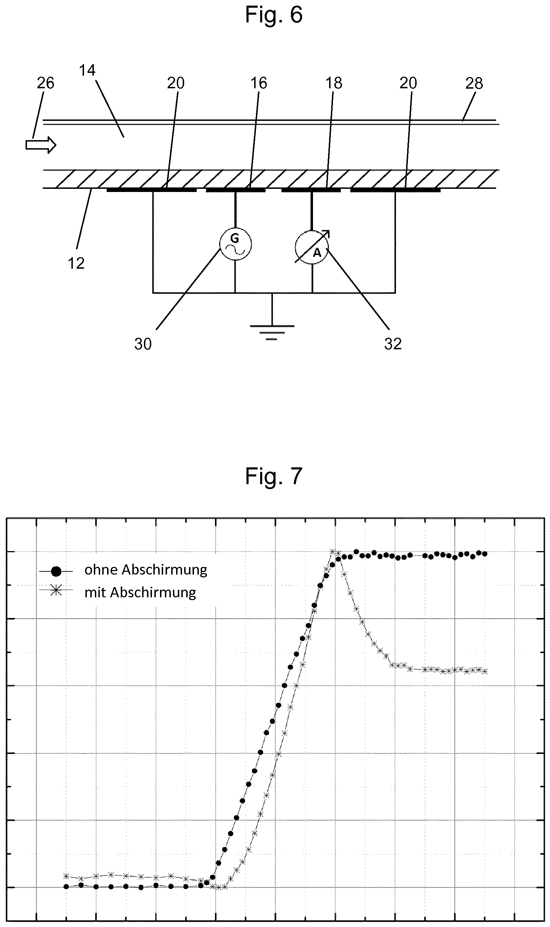

In Figur 6 ist ein Schnitt durch ein mikrofluidisches Bauteil 10 im Bereich des Fluidkanals 14 gezeigt. Das mikrofluidische Bauteil weist ein Substrat 12 auf, in welches der Fluidkanal 14 auf die eingangs beschriebene Art und Weise eingebracht ist. Auf seiner Oberseite ist das Substrat 12 mit einer Abdeckfolie 28 versehen, so dass der Fluidkanal 14 verschlossen ist. Die Fluidrichtung ist abermals durch den Pfeil 26 gekennzeichnet. Auf der Unterseite des Substrats 12 befindet sich benachbart zu dem Fluidkanal 14 eine Elektrodenanordnung bestehend aus einer Sendeelektrode 16, einer Empfangselektrode 18 und einer zweiteiligen ersten Abschirmelektrode 20, deren erster Teil vor der Sendeelektrode 16 und deren zweiter Teil nach der Empfangselektrode 18, bezogen auf die Fluidrichtung 26, angeordnet sind. Alle Elektroden befinden sich in einer Ebene parallel zur oder unmittelbar auf der unteren planen Oberfläche und sind somit koplanar angeordnet. Zwischen den Elektroden befinden sich jeweils Lücken, so dass die Empfangselektrode 18 kapazitiv zur Sendeelektrode 16 und die Abschirmelektrode 20 kapazitiv sowohl zur Sendeelektrode 16 als auch zur Empfangselektrode 18 gekoppelt sind. Die erste Abschirmelektrode 20 ist in dem gezeigten Ausführungsbeispiel auf Massepotential gezogen. Die Elektrode 16 ist an eine Wechselspannungsquelle 30 und die Empfangselektrode 18 an einen Signalaufnehmer 32 angeschlossen, der eingerichtet ist, den zeitlichen Verlauf eines Wechselstrom -oder Wechselspannungssignals zu erfassen.

Figur 7 zeigt ein Diagramm mit zwei Signalverläufen (simuliert), die jeweils an einer Empfangselektrode detektierbar sind. In vertikaler Richtung ist der Effektivwert des an der Empfangselektrode 18 eingekoppelten Wechselspannungs- oder Wechselstromsignals und in horizontaler Richtung die Zeit aufgetragen.

Der punktiert dargestellte Signalverlauf entspricht dem Signal an einer Empfangselektrode der Basiselektrodenanordnung ohne erste und zweite Abschirmelektrode, die so nicht zum Gegenstand der vorliegenden Erfindung gehört. Man erkennt zwar, dass eine die Basisanordnung passierende Flüssigkeitsfront einen signifikanten Signalsprung erzeugt, so dass bereits mit dieser Basisanordnung grundsätzlich das Vorhandensein einer Flüssigkeit in dem Fluidkanal in der Nähe des Sensors detektiert werden kann. Allerdings ist eine Aussage darüber, wo sich die Flüssigkeitsfront befindet, allein aus dem sprunghaften Anstieg nicht oder nur sehr vage abzulesen. Dies ändert sich auch nicht, wenn eine Ableitung aus dem punktförmigen Signalverlauf gebildet wird, weil der Anstieg des Signals über einen verhältnismäßig breiten Bereich konstant ist.

Dem gegenübergestellt ist der Signalverlauf an einer erfindungsgemäßen Elektrodenanordnung, wie sie in der Figur 2a dargestellt ist. Die Elektrodenanordnung besteht aus einer Sendeelektrode 16, einer Empfangselektrode 18 und einer ersten Abschirmelektrode 20, die in Fluidrichtung 26 in dieser Reihenfolge hintereinander und alle drei senkrecht zu der Erstreckungsrichtung des Fluidkanals 14 angeordnet sind. Allein die Präsenz der einfachen ersten Abschirmelektrode 20 hinter der Basiselektrodenanordnung bewirkt, dass zum einen die Flanke des effektiven Strom- oder Spannungswertes steiler wird und dass sich am Ende des Anstiegs ein ausgeprägtes Maximum einstellt, hinter dem der Effektivwert wieder auf ein immer noch gegenüber dem Eingangswert erhöhtes Niveau abfällt. Diese Ausbildung eines Extremwertes erleichtert signifikant die Ermittlung der Position der Flüssigkeitsfront, da das Maximum auf einfache Weise entweder direkt oder jedenfalls durch Bildung der Ableitung des gemessenen Signals ermittelt werden kann und dieser Extremwert der genauen Flüssigkeitsposition zugeordnet werden kann, wie nachfolgend erläutert werden wird.

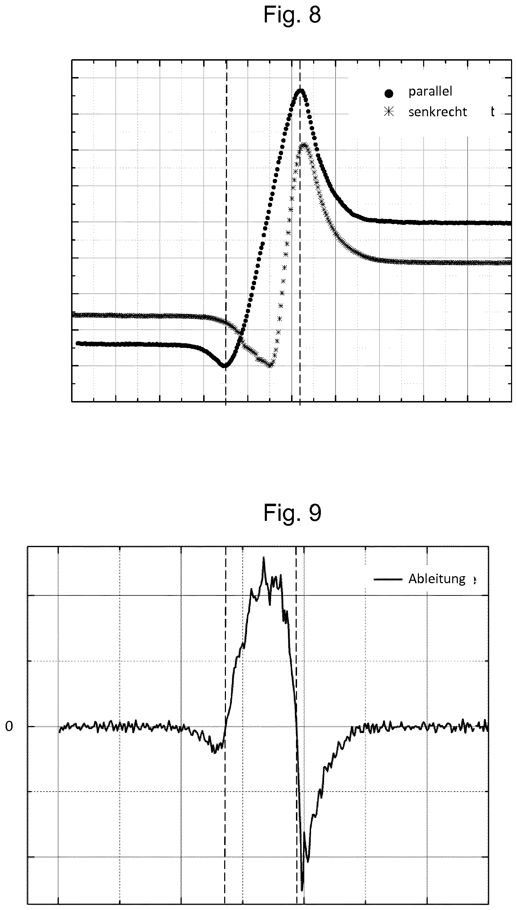

Zunächst sei jedoch noch anhand der Figur 8 gezeigt, welchen Einfluss die Orientierung des Spaltes zwischen der Sendeelektrode 16 und der Empfangselektrode 18 relativ zu der Ausrichtung des Fluidkanals 14 hat. Das Diagramm in Figur 8 zeigt zwei Signalkurven, die mit den zwei Elektrodenanordnungen aus den Figuren 5a und 5b messbar sind. Wieder ist in vertikaler Richtung der Effektivwert des an der Empfangselektrode 18 messbaren Wechselspannungs- oder Wechselstromsignals und in horizontaler Richtung die Zeit aufgetragen. Das Resultat mit der Elektrodenanordnung gemäß Figur 5a, bei der die Sendeelektrode 16 und die Empfangselektrode 18 parallel zu dem Fluidkanal 14 angeordnet und von einer ersten Abschirmelektrode 20 umrahmt sind, ist durch die punktierte Signalkurve repräsentiert. Das etwas kleinere, durch sternförmige Messpunkte wiedergegebene Signal wurde mit der Elektrodenanordnung 5b gewonnen, welches sich durch die senkrechte Orientierung des Spaltes zwischen der Sendeelektrode 16 und der Empfangselektrode 18 unterscheidet.

Deutlich zu sehen ist, dass sich bei beiden Kurvenverläufen im Gegensatz zu dem in Figur 7 zwei Extremwerte ausgebildet haben, nämlich zuerst ein weniger ausgeprägtes Minimum und anschließend ein stärker ausgeprägte Maximum. Die zwei Extremwerte sind darauf zurückzuführen, dass die Basiselektrodenanordnung sowohl auf ihrer Vorderseite als auch auf ihrer Rückseite, bezogen auf die Strömungsrichtung 26 des Fluids, abgeschirmt ist. Deshalb sei bereits an dieser Stelle festgehalten, dass kein grundsätzlicher, allenfalls ein qualitativer Unterschied zu erwarten wäre, wären Messungen nicht mit den zwei Elektrodenanordnungen aus den Figuren 5a und 5b sondern mit jenen aus den Figuren 4a und 4b durchgeführt würden. Jedenfalls kann festgestellt werden, dass beide Ausrichtungen der Basiselektrodenanordnung gleichermaßen geeignet sind, die Lage der Flüssigkeitsfront exakt zu bestimmen. Der wesentliche Unterschied zwischen beiden Orientierungen ist der, dass bei einer senkrechten Ausrichtung, geringfügige Fehlpositionierungen lateral zur Orientierung des Fluidkanals weniger schädlich sind als bei einer parallelen Ausrichtung. Ist der Spalt zwischen der Sendeelektrode 16 und der Empfangselektrode 18 geringfügig lateral zu dem Fluidkanal versetzt, ergibt sich sofort eine signifikante Abschwächung des Messsignals. Ein vergleichbarer Effekt tritt bei der senkrechten Orientierung der Sendeelektrode 16 und der Empfangselektrode 18 erst bei einem erheblich größeren lateralen Versatz der gesamten Elektrodenanordnung gegenüber dem Fluidkanal 14 auf.

Anhand beider Maxima kann noch eine präzisere Aussage zur Position der Flüssigkeitsfront getroffen werden. Ferner lässt sich eine Aussage über die Geschwindigkeit treffen, mit der sich die Flüssigkeit bzw. die Flüssigkeitsfront in dem Fluidkanal bewegt.

In Figur 9 ist zum Vergleich das Ableitungssignal aus dem unmittelbaren Signal der in Figur 8 gezeigten parallelen Anordnung dargestellt. Die Lage der Extremwerte der Kurve des Diagramms in Figur 8 lässt sich mit größerer Genauigkeit aus der Ableitung in Figur 9 anhand der Nulldurchgänge ermitteln, welche sehr scharf ausgeprägt sind und deshalb einen geringen Ablesefehler erzeugen.

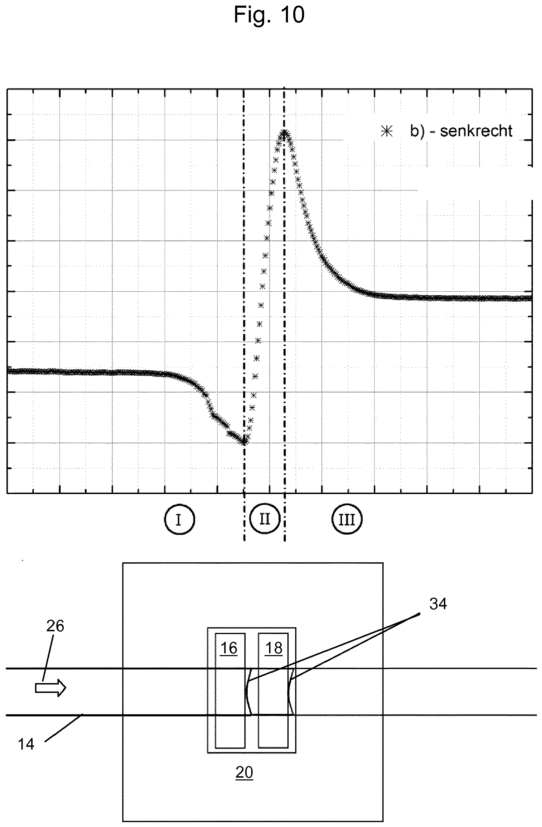

Im oberen Teil der Figur 10 ist erneut der bereits in Figur 8 vorgestellte Kurvenverlauf bei senkrechter Anordnung der Basiselektrodenanordnung wiederholt. Darunter in Figur 10 ist schematisch die zugehörige Elektrodenanordnung gezeigt. Die Strömungsrichtung der Flüssigkeit ist darin wieder durch den Pfeil 26 markiert. Die Elektrodenanordnung ist so skaliert und ausgerichtet, dass die Extremwerte der Messkurve jeweils mit einem Spalt zwischen der Sende- und Empfangselektrode und einem Spalt zwischen der Empfangselektrode und der Abschirmungselektrode zusammenfallen. Hierdurch soll illustriert werden, dass die Extremwerte einer Momentaufnahme entsprechen, in der die bogenförmig eingezeichnete Flüssigkeitsfront 34 zuerst in dem einen und dann in dem anderen Spalt angelangt war. Es ist zu erkennen, dass das in dem Diagramm gezeigte Minimum die Position der Fluidfront in der Lücke zwischen der Sendeelektrode 16 und der Empfangselektrode 18 repräsentiert, während das Maximum die Position der Fluidfront in dem Spalt zwischen der Empfangselektrode 18 und der Abschirmelektrode 20 repräsentiert.

Die Minima und Maxima teilen das Diagramm in einen Abschnitt I, in dem die Flüssigkeitsfront auf die Mitte der Basiselektrodenanordnung, hier den Spalt zwischen der Sende- und der Empfangselektrode, zuläuft, einen Abschnitt II, in dem die Flüssigkeitsfront die zweite Hälfte der Basiselektrodenanordnung, hier die Empfangselektrode 18, überstreicht, und einen Abschnitt III ein, in dem die Flüssigkeitsfront 34 die Abschirmelektrode 20 auslaufend, d. h. von der Basiselektrodenanordnung weg, überstreicht.

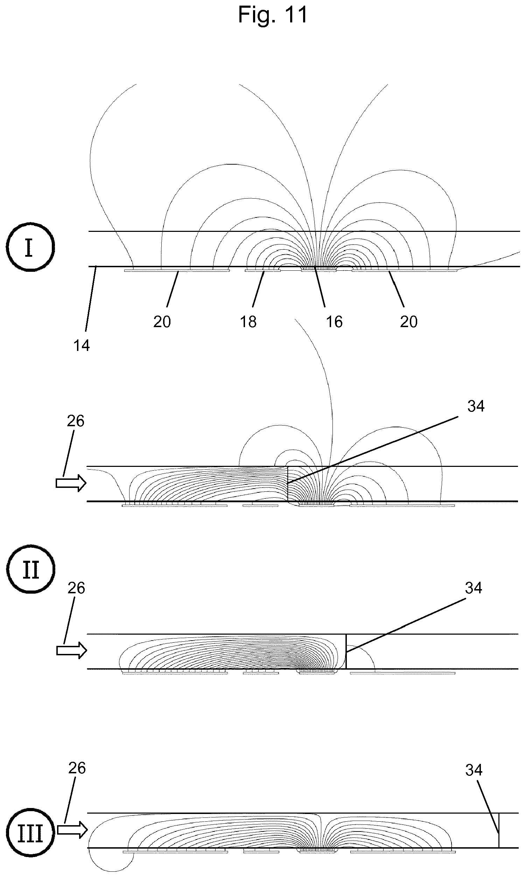

Die Veränderung des elektrischen Wechselfeldes von einem dieser Abschnitte zum nächsten aufgrund der Änderung der Permittivität während des Voranschreitens der Flüssigkeitsfront 34 in dem Fluidkanal 14 wird anhand von Figur 11 erläutert. Hierin sind die Feldlinienverläufe zu vier unterschiedliche Zeitpunkte festgehalten. Der Fluidkanal 14 mit der jeweils darunterliegenden Elektrodenanordnung bestehend aus der Sendeelektrode 16, der Empfangselektrode 18 und der beiderseits angeordneten Abschirmelektrode 20 sind ebenfalls dargestellt. Es ist zu erkennen, dass die Basiselektrodenanordnung senkrecht zum Kanalverlauf orientiert ist.

Der im oberen Teil festgehaltene Zeitpunkt zeigt den Feldverlauf bei leerem Fluidkanal. Das Feld baut sich symmetrisch um die Sendeelektrode 16 auf.

In der zweiten Momentaufnahme in Figur 11 ist der Feldverlauf gezeigt, während sich die Flüssigkeitsfront 34 zwischen der Sendeelektrode 16 und der Empfangselektrode 18 befindet. Wie zu sehen ist, sorgt die Präsenz der Flüssigkeit in dem linken Kanalabschnitt dafür, dass die Feldlinien die Empfangselektrode 18 im Wesentlichen überbrücken und gewissermaßen die erste Abschirmelektrode 20 unmittelbar mit der Sendeelektrode 16 verbinden. Dies ist der Grund für das in Figur 10 an entsprechender Stelle gezeigte Signalminimum. Das Signal fäll demnach insbesondere während sich die Flüssigkeitsfront von dem stromaufwärts gelegenen Abschnitt der ersten Abschirmelektrode 20 zur Basiselektrodenmitte hin bewegt.

In der dritten Momentaufnahme in Figur 11 ist festgehalten, was passiert, wenn sich die Flüssigkeitsfront 34 zwischen der Sendeelektrode 16 und dem stromabwärts gelegenen Abschnitt der ersten Abschirmelektrode 20 befinden. Wie zu sehen ist, verlaufen die Feldlinien weiterhin von der Sendeelektrode 16 zu dem einlaufseitigen Abschnitt der ersten Abschirmelektrode 20 aber wesentlich dichter nun auch zu der Empfangselektrode 18. Dies sorgt für das in dem Diagramm in der Figur 10 gezeigte Signalmaximum. Der Diagrammabschnitt II, in dem das Signal ansteigt, befindet sich also zwischen der zweiten und dritten Momentaufnahme, während die Flüssigkeitsfront sich von der Basiselektrodenmitte zu dem stromabwärts gelegenen Abschnitt der ersten Abschirmelektrode 20 bewegt.

Schließlich hält die untere Momentaufnahme in Figur 11 den Feldverlauf fest, wenn die Flüssigkeitsfront 34 die Elektrodenanordnung vollständig passiert hat, was dem Signal am rechten Bildrand in dem Diagramm gemäß Figur 10 entspricht. Im Vergleich mit der ersten Momentaufnahme zeigt der Umstand, dass die Feldlinien in dem Fluid deutlich dichter gedrängt verlaufen, dass das nunmehr in dem Fluidkanal 14 anstehende Fluid eine signifikante Auswirkung auf die Kapazität der Elektrodenanordnung hat, was darauf zurückzuführen ist, dass die Permittivität des Fluids deutlich höher ist als die des angrenzenden Mediums, beispielsweise Luft. Zuvor war das Signal von dem Maximalwert auf den erhöhten asymptotischen Pegel abgefallen. Der asymptotische Pegel war bereits im Wesentlichen erreicht, nachdem die Fluidfront den stromabwärts gelegenen Abschnitt der Abschirmelektrode vollends überstrichen hatte.

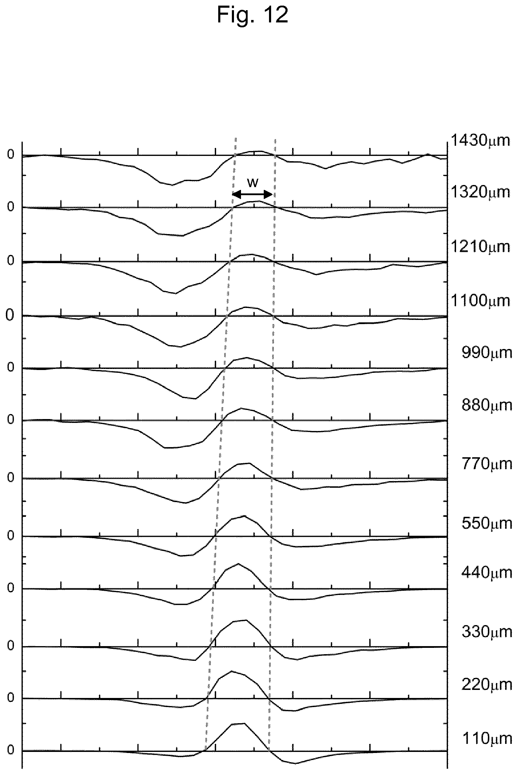

Figur 12 zeigt mehrere verschiedene Ableitungskurven, wie sie in Figur 9 vorgestellt wurden. Die Nulldurchgänge definieren jeweils die Position der Flüssigkeitsfront zwischen den einzelnen Abschnitten der Elektrodenanordnung, wie vorstehend geschildert. Den unterschiedlichen Ableitungskurven liegen, von oben nach unten betrachtet, Messungen mit abnehmenden vertikalen Abstand zwischen der koplanaren Elektrodenanordnung und dem Fluidkanal zugrunde. Wie zu erkennen ist, ist die Bestimmung der Position der Fluidfront zunächst über einen weiten Bereich unterschiedlicher vertikaler Abstände zwischen der Elektrodenanordnung und dem Fluidkanal möglich. Der Abstand variiert zwischen 0,11 mm und 1,43 mm und damit um mehr als 1000%. Des Weiteren ist zu erkennen, dass sich der Zeitpunkt und damit die Position des Nulldurchgangs mit steigendem Abstand der Elektrodenanordnung und dem Fluidkanal nur geringfügig nach hinten verschiebt und dass auch der Abstand w zwischen dem Maximum und dem Minimum sich nur moderat verändert. Diese große Abstandstoleranz konnte als genereller Vorteil der Anordnung mit einer ersten Abschirmelektrode ermittelt werden und stellt mithin einen weiteren Vorteil der erfindungsgemäßen Elektrodenanordnung dar. Grundsätzlich ist aber eine möglichst nahe Anordnung der Elektrodenebene an dem Fluidkanal bevorzugt, d.h. ein Abstand von höchstens 0,5 mm und besonders bevorzugt von höchstens 100 µm.

In Figur 13 ist ein Kurvenverlauf dargestellt, der das Messignal repräsentiert, wenn eine endliche Flüssigkeitssäule (auch Plug genannt) die Elektrodenanordnung passiert. Während zunächst die in Fließrichtung vordere Flüssigkeitsfront, also die Grenzfläche zwischen einem vorauseilenden Medium (Luft, Gas oder eine Flüssigkeit mit anderer Permittivität) und der nachzuweisenden Flüssigkeit über die Elektrodenanordnung streicht, ergibt sich der in dem Diagramm gemäß Figur 13 der auf der linken Seite gezeigte, zuvor diskutierten Signalanstieg mit Minimum und darauf folgendem Maximum. Nach Überstreichen der Elektrodenanordnung verbleibt das Messsignal auf dem höheren Signal, bis die hintere Flüssigkeitsfront, d. h. die Grenzfläche zwischen der Flüssigkeit und dem nachfolgenden Medium (Luft, Gas) die Elektrodenanordnung überstreicht. Hierbei ergibt sich ein spiegelbildlicher Signalverlauf, bei dem die Signalkurve zunächst ein ausgeprägtes Maximum und anschließend ein Minimum aufweist und im Auslauf der Rückseite des Flüssigkeitstropfens wieder den kleineren Ausgangswert annimmt.

Aus allen vorstehend diskutierten Signalverläufen mit wenigstens einem Minimum und einem Maximum kann durch simultane Zeitmessung nicht nur die Position, sondern auch die Geschwindigkeit ermittelt werden, mit der der Flüssigkeitstropfen die Messstelle überstrichen hat.

In Figur 14 ist ein Schnitt durch eine Ausführungsform eines externen Sensors 36 mit einem aufgelegten mikrofluidischen Bauteil 10 gezeigt. Das mikrofluidische Bauteil 10 weist wie zuvor ein Substrat 12 auf, in welches der Fluidkanal 14 auf die eingangs beschriebene Art und Weise eingebracht ist. Auf seiner Oberseite ist das Substrat 12 mit einer Abdeckfolie 28 versehen, so dass der Fluidkanal 14 verschlossen ist. Da das mikrofluidische Bauteil 10 hier kopfüber auf den Sensor 36 aufgelegt dargestellt ist, weist dessen Oberseite also nach unten. Die Fluidrichtung ist wieder durch den Pfeil 26 gekennzeichnet.

Diesmal befinden sich die Sendeelektrode 16, die Empfangselektrode 18 und die zweiteilige erste Abschirmelektrode 20 in der Ebene parallel zur und unmittelbar auf der oberen planen Oberfläche der Abdeckfolie 28 des mikrofluidischen Bauteils 10. Der erste Teil der ersten Abschirmelektrode 20 ist wieder vor der Sendeelektrode 16 und der zweite Teil nach der Empfangselektrode 18, bezogen auf die Fluidrichtung 26, angeordnet. Zwischen den Elektroden befinden sich jeweils Lücken, so dass die Empfangselektrode 18 kapazitiv zur Sendeelektrode 16 und die Abschirmelektrode 20 kapazitiv sowohl zur Sendeelektrode 16 als auch zur Empfangselektrode 18 gekoppelt sind.

Als weiterer wesentlicher Unterschied zu der zuvor diskutierten Ausführungsforme gemäß Figur 6 weist der Sensor 36 hier eine zweite Abschirmelektrode 38 parallel zu und beabstandet von der von der Sende-, Empfangs- und ersten Abschirmelektrode gebildeten Ebene auf. Die Sendeelektrode 16, die Empfangselektrode 18 und die erste Abschirmelektrode 20 sind nämlich auf einer ersten Oberfläche und die zweite Abschirmelektrode 38 auf einer gegenüberliegenden zweiten Oberfläche einer Platine 40 aufgebracht. Zweck der zweiten Abschirmelektrode 38 ist es, den sensitiven Bereich des Sensors auf die dem mikrofluidischen Bauteil zugewandte Seite einzuschränken und so die Sensitivität für die dort stattfindende Permittivitätsänderungen zu erhöhen. Diese Bauform des externen Sensors 36 kann auf einfache Weise in ein (hier nicht dargestelltes) Betreibergerät für den mikrofluidischen Chip 10 eingebaut werden.

### Bezugszeichenliste

- 10: mikrofluidisches Bauteil
- 12: Grundplatte/Substrat
- 14: Fluidkanal
- 15: Unterseite
- 16: Sendeelektrode
- 18: Empfangselektrode

- 20: erste Abschirmelektrode
- 22: Anschlusspunkt
- 23: Anschlusspunkt
- 24: Anschlusspunkt
- 26: Strömungsrichtung
- 28: Abdeckfolie

- 30: Wechselspannungsversorgung/Signalquelle
- 32: Signalaufnehmer
- 34: Flüssigkeitsfront
- 36: externer Sensor
- 38: zweite Abschirmelektrode
- 40: Platine

- b: Abstand der Extremwerte
- t: Abstand zwischen Flüssigkeitsfront und Ende des Flüssigkeitstropfens

## Patentansprüche

1. Sensor zum Erfassen einer Flüssigkeit in einem Fluidkanal (14) eines mikrofluidischen Bauteils (10),
**dadurch gekennzeichnet, dass** der Sensor eine Elektrodenanordnung mit einer Sendeelektrode (16), einer Empfangselektrode (18) und einer ersten Abschirmelektrode (20) umfasst, die koplanar auf einer Ebene angeordnet und parallel zu dem Fluidkanal und oberhalb oder unterhalb benachbart zu dem Fluidkanal (14) positionierbar sind, wobei die Sendeelektrode (16) und die Empfangselektrode (18) direkt kapazitiv gekoppelt sind, indem sie jeweils eine benachbart angeordnete Kante mit einem dazwischen liegenden Dielektrikum aufweisen, wobei zwischen der Sendeelektrode (16) und der Empfangselektrode (18) keine Abschirmung vorgesehen ist.

2. Sensor nach Anspruch 1,
**dadurch gekennzeichnet, dass** die benachbart angeordneten Kanten parallel verlaufen.

3. Sensor nach einem der vorstehenden Ansprüche,
**dadurch gekennzeichnet, dass** die erste Abschirmelektrode (20) benachbart zur Sendeelektrode (16) oder zur Empfangselektrode (18) oder zur Sendeelektrode (16) und zur Empfangselektrode (18) angeordnet ist.

4. Sensor nach Anspruch 3,
**dadurch gekennzeichnet, dass** die erste Abschirmelektrode (20) wenigstens zwei Abschnitte aufweist, von denen, in einer Richtung in der Ebene betrachtet, ein erster Abschnitt vor und ein zweiter Abschnitt hinter der Sendeelektrode (16) und der Empfangselektrode (18) angeordnet sind.

5. Sensor nach einem der vorstehenden Ansprüche,
**dadurch gekennzeichnet, dass** die erste Abschirmelektrode (20) die Sendeelektrode (16) und die Empfangselektrode (18) in der Ebene zumindest teilweise und bevorzugt vollständig umrahmt.

6. Sensor nach einem der vorstehenden Ansprüche,
**dadurch gekennzeichnet, dass** die erste Abschirmelektrode (20) geerdet ist.

7. Sensor nach einem der vorstehenden Ansprüche,
**gekennzeichnet durch** eine Signalquelle (30), die mit der Senderelektrode (16) verbunden ist, und einen Signalaufnehmer (32), der mit der Empfangselektrode (18) verbunden ist.

8. Sensor nach Anspruch 7,
**dadurch gekennzeichnet, dass** die Signalquelle (30) eine Wechselspannungsquelle ist.

9. Sensor nach Anspruch 7 oder 8,
**dadurch gekennzeichnet, dass** der Signalaufnehmer (32) eingerichtet ist, den zeitlichen Verlauf eines Wechselstrom- oder Wechselspannungssignals zu erfassen.

10. Mikrofluidisches Bauteil (10) mit einer Oberfläche (15) und einem im Inneren, im Wesentlichen parallel zu der Oberfläche (15) verlaufenden Fluidkanal (14),
**gekennzeichnet durch** einen Sensor nach einem der vorstehenden Ansprüche, dessen Sendeelektrode (16), Empfangselektrode (18) und erste Abschirmelektrode (20) koplanar auf der Oberfläche (15) und oberhalb oder unterhalb benachbart zu dem Fluidkanal (14) angeordnet sind.

11. Mikrofluidisches Bauteil (10) nach Anspruch 10,
**dadurch gekennzeichnet, dass** die erste Abschirmelektrode (20) wenigstens zwei Abschnitte aufweist, von denen, jeweils in Richtung des Fluidkanals (14) betrachtet, ein erster Abschnitt vor und ein zweiter Abschnitt hinter der Sendeelektrode (16) und der Empfangselektrode (18) angeordnet sind.

12. Verfahren zum Erfassen einer Flüssigkeit in einem Fluidkanal (14) eines mikrofluidischen Bauteils (10) mittels einer Elektrodenanordnung mit einer Sendeelektrode (16), einer Empfangselektrode (18) und einer ersten Abschirmelektrode (20), die koplanar auf einer Ebene im Wesentlichen parallel zu dem Fluidkanal (14) und oberhalb oder unterhalb benachbart zu dem Fluidkanal (14) angeordnet sind, wobei die Sendeelektrode (16) und die Empfangselektrode (18) jeweils eine benachbart angeordnete Kante mit einem dazwischen liegenden Dielektrikum aufweisen und wobei zwischen der Sendeelektrode (16) und der Empfangselektrode (18) keine Abschirmung vorgesehen ist, mit den Schritten:
- Beaufschlagen der Sendeelektrode (16) mit einer Wechselspannung,
- Einkoppeln der Wechselspannung in die Empfangselektrode (18),
- Abgreifen eines Wechselstrom- oder Wechselspannungssignals an der Empfangselektrode (18),
- Extrahieren von Extremwerten aus dem abgegriffenen Wechselstrom- oder Wechselspannungssignal,
- Zuordnen der Extremwerte zu der Position einer Flüssigkeitsfront (34).

13. Verfahren nach Anspruch 12,
**dadurch gekennzeichnet, dass** die erste Abschirmelektrode (20) wenigstens zwei Abschnitte aufweist, von denen, jeweils in Richtung des Fluidkanals (14) betrachtet, ein erster Abschnitt vor und ein zweiter Abschnitt hinter der Sendeelektrode (16) und der Empfangselektrode (18) angeordnet sind, und dass aus wenigstens zwei zeitlich aufeinander folgenden Extremwerten ein Geschwindigkeit der Flüssigkeitsfront (34) abgeleitet wird.

14. Verfahren nach Anspruch 12 oder 13,
**dadurch gekennzeichnet, dass** das mikrofluidische Bauteil (10) mit einer im Wesentlichen parallel zu dem Fluidkanal (14) verlaufenden Oberfläche benachbart zu der Elektrodenanordnung, die Bestandteil eines externen Sensors mit den Merkmalen nach einem der Ansprüche 1 bis 14 in einem Betreibergerät ist, positioniert wird.

15. Verfahren nach einem der Ansprüche 13 bis 14,
**dadurch gekennzeichnet, dass** die Sendeelektrode (16) und die Empfangselektrode (18) jeweils eine benachbart angeordnete Kante mit einem dazwischen liegenden Dielektrikum aufweisen und die benachbart angeordneten Kanten im Wesentlichen senkrecht zu dem Fluidkanal (14) positioniert werden.

## Claims

1. Sensor for detecting a liquid in a fluid channel (14) of a microfluidic component (10),
**characterised in that** the sensor comprises an electrode arrangement having a transmitting electrode (16), a receiving electrode (18) and a first shielding electrode (20), which is arranged in a coplanar manner on a plane and which can be positioned parallel with the fluid channel and in a state above or below adjacent to the fluid channel (14), wherein the transmitting electrode (16) and the receiving electrode (18) are directly coupled to each other in a capacitive manner by having an adjacently arranged edge with a dielectric located therebetween, wherein no shielding is provided between the transmitting electrode (16) and the receiving electrode (18).

2. Sensor according to claim 1,
**characterised in that** the adjacently arranged edges extend in a parallel manner.

3. Sensor according to either of the preceding claims,
**characterised in that** the first shielding electrode (20) is arranged adjacent to the transmitting electrode (16) or the receiving electrode (18) or the transmitting electrode (16) and the receiving electrode (18).

4. Sensor according to claim 3,
**characterised in that** the first shielding electrode (20) has at least two portions, of which, when viewed in a direction in the plane, a first portion is arranged in front of and a second portion is arranged behind the transmitting electrode (16) and the receiving electrode (18).

5. Sensor according to any one of the preceding claims,
**characterised in that** the first shielding electrode (20) surrounds the transmitting electrode (16) and the receiving electrode (18) in the plane at least partially and preferably completely.

6. Sensor according to any one of the preceding claims,
**characterised in that** the first shielding electrode (20) is earthed.

7. Sensor according to any one of the preceding claims,
**characterised by** a signal source (30) which is connected to the transmitting electrode (16) and a signal receiver (32) which is connected to the receiving electrode (18).

8. Sensor according to claim 7,
**characterised in that** the signal source (30) is an alternating voltage source.

9. Sensor according to claim 7 or claim 8,
**characterised in that** the signal receiver (32) is configured to detect the time progression of an alternating current or alternating voltage signal.

10. Microfluidic component (10) having a surface (15) and a fluid channel (14) which extends at the inner side, substantially parallel with the surface (15),
**characterised by** a sensor according to any one of the preceding claims, whose transmitting electrode (16), receiving electrode (18) and first shielding electrode (20) are arranged in a coplanar manner on the surface (15) and in a state above or below adjacent to the fluid channel (14).

11. Microfluidic component (10) according to claim 10,
**characterised in that** the first shielding electrode (20) has at least two portions of which, when viewed in the direction of the fluid channel (14), a first portion is arranged in front of and a second portion is arranged behind the transmitting electrode (16) and the receiving electrode (18).

12. Method for detecting a liquid in a fluid channel (14) of a microfluidic component (10) by means of an electrode arrangement having a transmitting electrode (16), a receiving electrode (18) and a first shielding electrode (20) which are arranged in a coplanar manner on a plane substantially parallel with the fluid channel (14) and in a state above or below adjacent to the fluid channel (14), wherein the transmitting electrode (16) and the receiving electrode (18) each have an adjacently arranged edge having a dielectric located therebetween, and wherein no shielding is provided between the transmitting electrode (16) and the receiving electrode (18), having the steps of:
- acting on the transmitting electrode (16) with an alternating voltage,
- coupling the alternating voltage into the receiving electrode (18),
- tapping an alternating current or alternating voltage signal at the receiving electrode (18),
- extracting extreme values from the tapped alternating current or alternating voltage signal,
- associating the extreme values with the position of a liquid front (34).

13. Method according to claim 12,
**characterised in that** the first shielding electrode (20) has at least two portions of which, when viewed in the direction of the fluid channel (14), a first portion is arranged in front of and a second portion is arranged behind the transmitting electrode (16) and the receiving electrode (18) and **in that** from at least two temporally sequential extreme values a speed of the liquid front (34) is derived.

14. Method according to claim 12 or claim 13,
**characterised in that** the microfluidic component (10) is positioned with a surface which extends substantially parallel with the fluid channel (14) adjacent to the electrode arrangement, which is a component of an external sensor having the features according to any one of claims 1 to 14 in an operator device.

15. Method according to either claim 13 or claim 14,
**characterised in that** the transmitting electrode (16) and the receiving electrode (18) each have an adjacently arranged edge with a dielectric located therebetween and the adjacently arranged edges are positioned substantially perpendicularly to the fluid channel (14).

## Revendications

1. Capteur pour détecter un liquide dans un canal de fluide (14) d'un composant microfluidique (10),
**caractérisé en ce que** le capteur comprend un ensemble électrode avec une électrode d'émission (16), une électrode de réception (18) et une première électrode de blindage (20), qui sont agencées de manière coplanaire sur un plan et positionnables parallèlement au canal de fluide et au-dessus ou en dessous de manière adjacente au canal de fluide (14), dans lequel l'électrode d'émission (16) et l'électrode de réception (18) sont couplées directement de manière capacitive **en ce qu'**elles présentent respectivement une arête agencée de manière adjacente avec un diélectrique situé entre, dans lequel aucun blindage n'est prévu entre l'électrode d'émission (16) et l'électrode de réception (18).

2. Capteur selon la revendication 1,
**caractérisé en ce que** les arêtes agencées de manière adjacente s'étendent parallèlement.

3. Capteur selon l'une quelconque des revendications précédentes, **caractérisé en ce que** la première électrode de blindage (20) est agencée de manière adjacente à l'électrode d'émission (16) ou à l'électrode de réception (18) ou à l'électrode d'émission (16) et à l'électrode de réception (18).

4. Capteur selon la revendication 3,
**caractérisé en ce que** la première électrode de blindage (20) présente au moins deux sections, dont, dans une vue dans une direction dans le plan, une première section est agencée devant et une deuxième section derrière l'électrode d'émission (16) et l'électrode de réception (18).

5. Capteur selon l'une quelconque des revendications précédentes,
**caractérisé en ce que** la première électrode de blindage (20) encadre l'électrode d'émission (16) et l'électrode de réception (18) dans le plan au moins en partie et de préférence entièrement.

6. Capteur selon l'une quelconque des revendications précédentes,
**caractérisé en ce que** la première électrode de blindage (20) est mise à la terre.

7. Capteur selon l'une quelconque des revendications précédentes,
**caractérisé par** une source de signal (30), qui est reliée à l'électrode d'émission (16), et un récepteur de signal (32), qui est relié à l'électrode de réception (18).

8. Capteur selon la revendication 7,
**caractérisé en ce que** la source de signal (30) est une source de tension alternative.

9. Capteur selon la revendication 7 ou 8,
**caractérisé en ce que** le récepteur de signal (32) est conçu pour détecter la courbe dans le temps d'un signal de courant alternatif ou de tension alternative.

10. Composant microfluidique (10) avec une surface (15) et un canal de fluide (14) s'étendant à l'intérieur, sensiblement parallèlement à la surface (15),
**caractérisé par** un capteur selon l'une quelconque des revendications précédentes, dont l'électrode d'émission (16), l'électrode de réception (18) et la première électrode de blindage (20) sont agencées de manière coplanaire sur la surface (15) et au-dessus ou en dessous de manière adjacente au canal de fluide (14).

11. Composant microfluidique (10) selon la revendication 10,
**caractérisé en ce que** la première électrode de blindage (20) présente au moins deux sections, dont, dans une vue respectivement dans la direction du canal de fluide (14), une première section est agencée devant et une deuxième section derrière l'électrode d'émission (16) et l'électrode de réception (18).

12. Procédé pour détecter un liquide dans un canal de fluide (14) d'un composant microfluidique (10) au moyen d'un ensemble électrode avec une électrode d'émission (16), une électrode de réception (18) et une première électrode de blindage (20), qui sont agencées de manière coplanaire sur un plan sensiblement parallèlement au canal de fluide (14) et au-dessus ou en dessous de manière adjacente au canal de fluide (14), dans lequel l'électrode d'émission (16) et l'électrode de réception (18) présentent respectivement une arête agencée de manière adjacente avec un diélectrique situé entre et dans lequel aucun blindage n'est prévu entre l'électrode d'émission (16) et l'électrode de réception (18), avec les étapes suivantes :
- application d'une tension alternative à l'électrode d'émission (16),
- injection de la tension alternative dans l'électrode de réception (18),
- prélèvement d'un signal de courant alternatif ou de tension alternative au niveau de l'électrode de réception (18),
- extraction de valeurs extrêmes à partir du signal de courant alternatif ou de tension alternative prélevé,
- association des valeurs extrêmes à la position d'un front de liquide (34).

13. Procédé selon la revendication 12,
**caractérisé en ce que** la première électrode de blindage (20) présente au moins deux sections, dont, dans une vue respectivement dans la direction du canal de fluide (14), une première section est agencée devant et une deuxième section derrière l'électrode d'émission (16) et l'électrode de réception (18), et qu'une vitesse du front de liquide (34) est déduite d'au moins deux valeurs extrêmes successives dans le temps.

14. Procédé selon la revendication 12 ou 13,
**caractérisé en ce que** le composant microfluidique (10) est positionné avec une surface s'étendant de manière sensiblement parallèle au canal de fluide (14) de manière adjacente à l'ensemble électrode, qui fait partie d'un capteur externe avec les caractéristiques selon l'une quelconque des revendications 1 à 14 dans un appareil d'exploitant.

15. Procédé selon l'une quelconque des revendications 13 à 14,
**caractérisé en ce que** l'électrode d'émission (16) et l'électrode de réception (18) présentent respectivement une arête agencée de manière adjacente avec un diélectrique situé entre et les arêtes agencées de manière adjacente sont positionnées sensiblement perpendiculairement au canal de fluide (14).
